# EUROPÄISCHE PATENTSCHRIFT

(11) **EP 3 390 250 B1**
(45) Veröffentlichungstag und Bekanntmachung des Hinweises auf die Patenterteilung: **16.08.2023**
(21) Anmeldenummer: 16823228.8
(22) Anmeldetag: 16.12.2016
(51) Int. Cl.: B65G 39/20, F16G 13/06, F16C 13/00

(54) **LAUFROLLE, LAUFROLLENEINRICHTUNG, GELENKKETTE, SOWIE DIE VERWENDUNG EINER GELENKKETTE ALS FÖRDERKETTE**
ROLLER, ROLLER DEVICE, LINK CHAIN, AND USE OF A LINK CHAIN AS A CONVEYING CHAIN
ROULEAU DE ROULEMENT, MÉCANISME À ROULEAU DE ROULEMENT, CHAÎNE À MAILLONS ET UTILISATION D'UNE CHAÎNE À MAILLONS COMME CHAÎNE DE TRANSPORT

(30) Priorität: 18.12.2015 DE 102015122207
(43) Veröffentlichungstag der Anmeldung: 24.10.2018
(73) Patentinhaber: KettenWulf Betriebs GmbH, 59889 Eslohe-Kückelheim (DE)
(72) Erfinder: PADBERG, Frank, 57392 Schmallenberg (DE); HANEMANN, Christian, 59872 Meschede (DE)
(74) Vertreter: Schäperklaus, Jochen
(86) Internationale Anmeldenummer: PCT/EP2016/081543
(87) Internationale Veröffentlichungsnummer: WO 2017/103183

(56) Entgegenhaltungen:
- EP-A1- 2 339 211
- EP-A2- 1 834 906
- DE-A1- 3 003 564
- DE-A1- 4 420 669
- DE-A1-102006 030 212
- DE-A1-102007 053 185
- DE-C1- 19 615 416
- DE-U1-202008 011 613
- KR-A- 20140 007 056
- KR-Y1- 200 445 609
- US-B1- 6 702 350
- US-B2- 9 028 352

## Beschreibung

Die vorliegende Erfindung betrifft eine Laufrolleneinrichtung gemäß dem Oberbegriff des Anspruchs 1 sowie eine Gelenkkette gemäß dem Oberbegriff des Anspruchs 9 sowie eine Verwendung einer Gelenkkette gemäß Anspruch 11.

Eine Laufrolle ist aus dem Stand der Technik hinreichend bekannt. Sie wird beispielsweise im Zusammenhang mit Gelenkketten verwendet, wenn diese als Förderketten eingesetzt werden. Die DE 10 2007 053 185 A1 offenbart eine Laufrolle, die als Laufrolleneinheit ausgestaltet ist und mindestens eine Aufsteckbuchse, ein Lager und eine Rolle aufweist.

Eine Gelenkkette umfasst eine Anzahl von Kettengliedern, insbesondere eine Anzahl von Innengliedern und Außengliedern, die gelenkig, sprich mittels eines Kettengelenks, miteinander verbunden sind. Diese Gelenke ermöglichen der Gelenkkette beispielsweise ein Umschlingen der im Antriebsstrang befindlichen Kettenräder.

Die Innenglieder werden vorzugsweise aus zwei Innenlaschen gebildet, die mittels zweier Buchsen miteinander verbunden sind. Denkbar ist auch eine Innenlasche in Form einer Blocklasche. Die Außenglieder werden vorzugsweise aus zwei Außenlaschen gebildet, die mittels zweier Bolzen miteinander verbunden sind. Bei den benachbarten Kettengliedern ist jeweils ein Bolzen gelenkig in der Buchse aufgenommen. Bolzen und Buchse bilden das Kettengelenk. Diese Anordnung lässt sich beliebig wiederholen, so dass eine Gelenkkette beliebiger Länge hergestellt werden kann. Die Anzahl der Laschen pro Kettenglied ist zudem variabel, so dass pro Kettenglied selbstverständlich auch mehr als zwei Laschen vorgesehen sein können.

Gelenkketten werden, neben zahlreichen anderen Anwendungen, gerne als Förderkette eingesetzt. Zu diesem Zweck sind meist auf verlängerten Bolzen oder Buchsen der Gelenkkette Laufrollen angebracht. Auch eine Anbringung auf den Laschen oder anderen Komponenten der Gelenkkette ist denkbar. Die Laufrollen dienen im Wesentlichen dazu, dass die Gelenkkette auf einer Führungsschiene laufen kann, über welche Lasten des Förderguts abgeführt werden können. Durch die Laufrollen wird ferner die Kettenzugkraft reduziert, da die Zugkraft infolge von weniger Reibung bzw. Rollreibung reduziert wird. Auch kann vorzugsweise vorgesehen sein, dass zumindest einige Laschen dazu eingerichtet sind, mit Anbauteilen, wie beispielsweise Plattformen, verbunden zu werden. Hierzu sind einige Kettenglieder beispielsweise mit Anschlussmitteln für Anbauteile ausgestattet. Die Anschlussmittel können beispielsweise als Winkellaschen ausgeführt sein, die neben der eigentlichen Lasche einen Ausleger aufweisen, mit dem die Anbauteile verbunden werden können. Im Querschnitt ergibt sich eine beispielsweise L- förmige Lasche.

Beim Fördern von verschiedenen Gütern und Rohstoffen sind die als Förderketten eingesetzten Gelenkketten dem Fördergut selbst und den Einflüssen der Umwelt und Umgebung ausgesetzt. Dabei können Schmutz und andere Stoffe und Flüssigkeiten in Teile der Gelenkkette, insbesondere die Laufrollen, eindringen und dort zu einem schnelleren und erhöhten Verschleiß beitragen.

Stand der Technik ist es, dass im Bereich der Fördertechnik an Gelenkketten Laufrollen auf verlängerten Bolzen bzw. Buchsen oder auf anderen an den Gelenkketten befestigten Wellenelementen montiert werden.

Eine derartige Kombination aus Gelenkkette und Laufrolle ist beispielsweise aus der DE 10 2006 057461 A1 bekannt geworden.

Wenn die Laufrollen ausfallen oder an ihre Verschleißgrenze kommen, kann es notwendig sein, diese auszuwechseln.

Da die Laufrolle bzw. deren Lager direkt auf dem verlängerten Bolzen bzw. einem Wellenelement angeordnet sind, ist die Demontage der Laufrolle mit einem hohen Aufwand verbunden. In einem solchen Fall müssen mehrere Bauteile, auch beispielsweise mittels Presspassungen gefügte Bauteile, einzeln nacheinander demontiert werden. Aber auch die Montage ist aufwendig.

Eine Laufrolleneinrichtung ist aus der KR 2014 0007056 A bekannt. Diese Laufrolleneinrichtung umfasst einen Aufsteckbolzen sowie eine auf dem Aufsteckbolzen angebrachte Laufrolle, wobei die Laufrolle als Laufrolleneinheit ausgestaltet ist, die mindestens eine Aufsteckbuchse, ein Lager und eine Rolle aufweist. Ferner umfasst die Laufrolleneinrichtung ein Befestigungssystem zur Befestigung vorzugsweise zur lösbaren Befestigung, insbesondere zur lösbaren axialen Fixierung, der Laufrolleneinheit, insbesondere der Aufsteckbuchse, auf dem Aufsteckbolzen. Diese Laufrolleneinrichtung hat den Nachteil, dass die Montage beziehungsweise Demontage aufgrund der Ausgestaltung des Befestigungssystems relativ aufwendig ist.

Aus der US 9 028 352 B2 ist eine gattungsgemäße Laufrolleneinrichtung mit einem Befestigungssystem bekannt, welches als Clip-Befestigungssystem zur Montage der Laufrolleneinheit auf dem Aufsteckbolzen ausgebildet ist. Das Clip-Befestigungssystem umfasst eine Nut in der inneren Oberfläche der Aufsteckbuchse, eine Nut in der Oberfläche des Aufsteckbolzens sowie einen flexiblen Sicherungsring.

Die EP 1 834 906 A2 offenbart eine Laufrolleneinrichtung nach dem Oberbegriff des Anspruchs 1 und eine Gelenkkette, welche die besagte Laufrolleneinrichtung umfasst, wobei die Gelenkkette als Förderkette verwendet wird.

Die Aufgabe der vorliegenden Erfindung liegt darin, eine Laufrolleneinrichtung der eingangs genannten Art zur Verfügung zu stellen, bei welcher die Montage und/oder Demontage vereinfacht ist. Erfindungsgemäß wird diese Aufgabe durch eine Laufrolleneinrichtung mit den kennzeichnenden Merkmalen des Anspruchs 1 gelöst. Erfindungsgemäß wird vorgeschlagen, dass das Clip-Befestigungssystem mit einer Löseeinrichtung ausgestattet ist, wobei die Nut in dem Aufsteckbolzen durch den Aufsteckbolzen selbst und eine vor der Stirnseite des Aufsteckbolzens lösbar befestigte Platte gebildet ist.

Wird die Laufrolleneinheit auf den Aufsteckbolzen aufgeschoben, weicht der Sicherungsring zunächst zurück bis die Nuten fluchten, um dann in beiden Nuten aufgenommen zu sein und einem Abziehen der Laufrolleneinheit entgegenzuwirken. Diese Montage kann einfach und werkzeuglos erfolgen.

Dadurch, dass die Laufrolle als Laufrolleneinheit ausgestaltet ist, umfassend mindestens eine Aufsteckbuchse, ein Lager und eine Rolle, kann die vorgenannte Einheit als Ganzes montiert und demontiert werden. Insofern muss beispielsweise nicht das Lager als einzelnes Teil demontiert werden, sondern kann zusammen mit der Rolle und der Aufsteckbuchse von dem Aufsteckbolzen entfernt werden. Mit anderen Worten ist die Rolle inklusive Lagerung und vorzugsweise Abdichtung auf der Aufsteckbuchse montiert. Durch den Einsatz dieser Aufsteckbuchse, die auf den Aufsteckbolzen bzw. ein Wellenelement aufgesteckt werden kann, kann der Montage- sowie Demontageaufwand reduziert werden. In diesem Fall werden die Rolle sowie alle Bauteile, die zur Lagerung und vorzugsweise Abdichtung der Rolle benötigt werden, auf der Aufsteckbuchse aufgebaut. Diese Baugruppe wird dann als Laufrolleneinheit bezeichnet.

Erfindungsgemäß ist vorgesehen, dass das Clip-Befestigungssystem mit einer Löseeinrichtung ausgestattet ist, wobei die Nut in dem Aufsteckbolzen durch den Aufsteckbolzen selbst und eine vor die Stirnseite des Aufsteckbolzens aufgeschraubte Platte gebildet wird. Hierdurch wird ein lösbares Clip-Befestigungssystem bereitgestellt, welches einfach und robust aufgebaut ist und zudem leicht vor Ort gelöst werden kann. Die Platte kann nach Abnahme des Rollendeckels und des Aufsteckbuchsendeckels vor Ort abgeschraubt werden, wodurch die Nut einseitig geöffnet wird und die Laufrolleneinheit vom Aufsteckbolzen abgezogen werden kann. Entsprechend kann dann auch die Aufsteckbuchse von dem Aufsteckbolzen und damit die gesamte Laufrolleneinheit von dem Aufsteckbolzen abgenommen werden. Die Montage erfolgt wie gehabt, wenn die Platte zunächst wieder aufgeschraubt und die Laufrolleneinheit aufgeschoben wird. Die Laufrolleneinheit kann ausgetauscht oder beispielsweise wieder mit Schmierstoff befüllt und der Rollendeckel kann erneut geschlossen werden. Die Laufrolleneinheit kann wieder durch einfaches Aufstecken auf den Aufsteckbolzen befestigt werden.

Weitere vorteilhafte Ausgestaltungen der vorgeschlagenen Erfindung ergeben sich aus den Merkmalen der Unteransprüche.

In einer weiteren vorteilhaften Ausgestaltung der Erfindung kann vorgesehen sein, dass das Lager zwischen der Rolle und der Aufsteckbuchse lösbar axial fixiert ist, wobei die lösbare axiale Fixierung insbesondere einen Absatz im Innenraum der Rolle sowie einen entsprechenden Absatz auf der Außenfläche der Aufsteckbuchse sowie mindestens einen Sicherungsring umfasst, der in eine Nut in der Rolle und/oder der Aufsteckbuchse eingelegt wird.

In einer weiteren vorteilhaften Ausgestaltung der Erfindung kann vorgesehen sein, dass die Laufrolle mit einer Schmiermittelaufnahmeanordnung ausgestattet ist. Die Schmiermittelaufnahmeanordnung ermöglicht es, die kompakte Laufrolleneinheit bereits mit Schmiermittel aufgefüllt bereitzustellen, sprich das Schmiermittel muss nicht vor Ort, beispielsweise in der verschmutzten Umgebung einer Förderkette, eingefüllt werden, sondern ist bereits in der Laufrolleneinheit vorhanden.

In einer weiteren vorteilhaften Ausgestaltung der Erfindung kann vorgesehen sein, dass die Schmiermittelaufnahmeanordnung einen Schmiermittelaufnahmeraum umfasst. Der Schmiermittelaufnahmeraum wird im Wesentlichen durch den Zwischenraum zwischen Rolle und Aufsteckbuchse bereitgestellt. Er dient als Reservoir für das Schmiermittel.

In einer weiteren vorteilhaften Ausgestaltung der Erfindung kann vorgesehen sein, dass die Schmiermittelaufnahmeanordnung mindestens eine Dichtungsanordnung, insbesondere mindestens eine Gleitringdichtung, umfasst. Die Dichtungsanordnung kann den Schmiermittelaufnahmeraum abdichten. Eine Gleitringdichtung bzw. eine Kombination einer Gleitringdichtung mit einer weiteren berührenden oder berührungsfreien Dichtung haben sich in Einsatzfällen mit starken Verschmutzungen als zuverlässig erwiesen.

Die Gleitringdichtung eignet sich hervorragend für die Abdichtung des Schmiermittelaufnahmeraums, insbesondere bei einer Relativbewegung der Gleitringe zueinander, ist jedoch bei der Montage sehr schmutzempfindlich. Durch das Vormontieren der kompletten Laufrolleneinheit kann die Montage an einem sauberen Ort durchgeführt werden. Somit wird die Kontamination mit Schmutz auf ein Minimum reduziert.

In einer weiteren vorteilhaften Ausgestaltung der Erfindung kann vorgesehen sein, dass die Schmiermittelaufnahmeanordnung einen lösbar mit der Rolle verbundenen Rollendeckel und/oder einen lösbar mit der Aufsteckbuchse verbundenen Aufsteckbuchsendeckel umfasst. Der Schmiermittelaufnahmeraum wird letztendlich durch den Zwischenraum zwischen Rolle und Aufsteckbuchse bereitgestellt und durch die oben genannten Komponenten verschlossen, insbesondere die an sich hohlzylinderförmige Rolle durch den Rollendeckel und die an sich hohlzylinderförmige Aufsteckbuchse durch den Buchsendeckel. Insbesondere die Komponenten Rollendeckel sowie Aufsteckbuchsendeckel können im Nachhinein entfernt werden, um den Schmiermittelaufnahmeraum zugänglich zu machen. Einerseits kann hierdurch der Schmiermittelaufnahmeraum zugänglich gemacht werden, beispielsweise um Schmierstoff nachzufüllen oder auszutauschen. Andererseits können Komponenten, wie beispielsweise die Stirnseite des Aufsteckbolzens, zugänglich gemacht werden und das Clip-Verbindungsmittel gelöst werden.

Die Anwendungsgebiete der Laufrolleneinrichtung sind vielfältig. Letztendlich kann der Aufsteckbolzen an vielen unterschiedlichen Komponenten angebracht werden, wie beispielsweise an Laschen von Gelenkketten, an Anbauteilen, wie Plattformen von Förderbändern, oder ganz allgemein dort, wo Laufrollen benötigt werden.

In einer weiteren vorteilhaften Ausgestaltung der Erfindung kann vorgesehen sein, dass die Laufrolleneinrichtung mit einer Verdrehsicherungseinrichtung zwischen der Aufsteckbuchse und dem Aufsteckbolzen ausgestattet ist, wobei die Verdrehsicherungseinrichtung insbesondere eine Ausbuchtung in dem Innenraum der Aufsteckbuchse und eine korrespondierende Einbuchtung in dem Aufsteckbolzen umfasst. Die Verdrehsicherungseinrichtung sichert die Aufsteckbuchse gegen Verdrehen. Es wird letztendlich sichergestellt, dass die Drehung der Rolle über das Lager vorgenommen wird und beispielsweise keine Drehung der Aufsteckbuchse auf dem Aufsteckbolzen erfolgt.

In einer weiteren vorteilhaften Ausgestaltung der Erfindung kann vorgesehen sein, dass die Laufrolleneinrichtung mit einer Anschlageinrichtung zur Begrenzung der axialen Verschiebbarkeit der Aufsteckbuchse gegenüber dem Aufsteckbolzen ausgestattet ist, wobei die Anschlageinrichtung insbesondere einen Absatz an dem Aufsteckbolzen und einen entsprechenden Absatz an der Aufsteckbuchse umfasst. Durch die vorgenannte Maßnahme kann sichergestellt werden, dass die Aufsteckbuchse nur über eine vorbestimmte Länge auf den Aufsteckbolzen aufgeschoben werden kann.

Eine weitere Aufgabe der vorliegenden Erfindung liegt darin, eine Gelenkkette mit einer Laufrolleneinrichtung bereitzustellen, bei welcher die Montage und/oder Demontage der Laufrolle vereinfacht ist.

Erfindungsgemäß wird diese Aufgabe durch die kennzeichnenden Merkmale des Anspruchs 9 gelöst. Dadurch, dass die Gelenkkette mit einer Laufrolleneinrichtung gemäß einem der Ansprüche 1 bis 8 ausgestattet ist, können die oben beschriebenen Vorteile der Laufrolleneinrichtung für die Gelenkkette nutzbar gemacht werden.

In einer vorteilhaften Ausgestaltung der Erfindung kann vorgesehen sein, dass die Gelenkkette mindestens zwei Kettenglieder, insbesondere ein Innenglied und ein Außenglied, umfasst, wobei das Innenglied als Blocklasche mit zwei Buchsen ausgestaltet ist oder mindestens zwei Innenlaschen umfasst, die von zwei Buchsen miteinander verbunden sind, wobei das Außenglied mindestens zwei Außenlaschen umfasst, die mit zwei Bolzen miteinander verbunden sind, wobei jeweils eine Buchse und ein in die Buchse eingesteckter Bolzen benachbarter Kettenglieder ein Kettengelenk ausbilden, wobei der Aufsteckbolzen als Verlängerung des Bolzens ausgestaltet ist, der aus der Außenlasche herausragt, wobei die Laufrolleneinheit auf den Aufsteckbolzen aufgesteckt ist. Es bietet sich in diesem Zusammenhang an, den ohnehin vorhandenen Bolzen zu verlängern und entsprechend als Aufsteckbolzen aus der Gelenkkette herauszuführen. Der Aufsteckbolzen dient im Wesentlichen zur Verbindung der Laufrolleneinheit mit der Gelenkkette und ragt vorzugsweise aus der Außenlasche senkrecht hervor. Die Verlängerung des Bolzens kann entsprechend als Aufsteckbolzen genutzt werden.

Eine bevorzugte Verwendung der vorgenannten Gelenkkette stellt die so genannte Förderkette dar. Hierzu kann die Gelenkkette neben den Laufrollen auch mit Anschlussmitteln zur Anbringung von Anbauteilen, wie beispielsweise Plattformen, ausgestattet sein. Eine erfindungsgemäße Förderkette umfasst im Wesentlichen eine erfindungsgemäße Gelenkkette sowie mindestens eine erfindungsgemäße Laufrolleneinrichtung und insbesondere mindestens ein Anschlussmittel für Anbauteile, wie beispielsweise Plattformen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine als Laufrolleneinheit ausgestaltete Laufrolle in einer perspektivischen Darstellung;
- Fig. 2: eine als Laufrolleneinheit ausgestaltete Laufrolle in einer perspektivischen Darstellung;
- Fig. 3: eine als Laufrolleneinheit ausgestaltete Laufrolle in einer geschnittenen Ansicht;

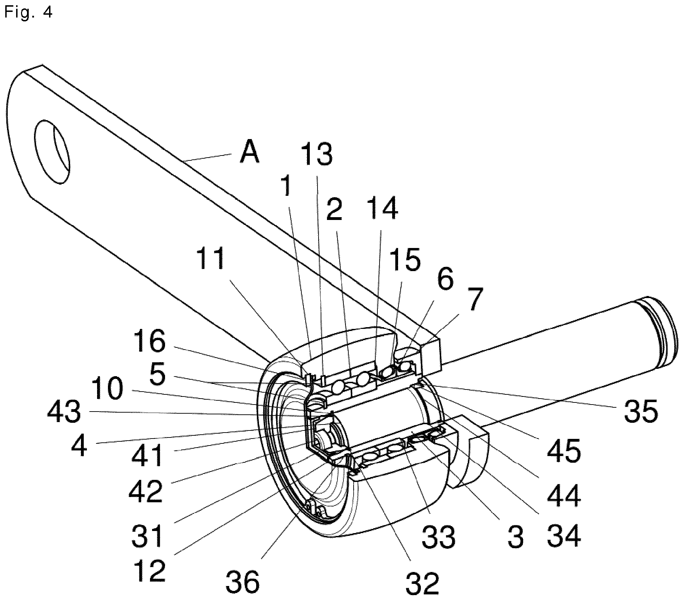

- Fig. 4: eine erfindungsgemäße Laufrolleneinrichtung (mit Außenlasche einer Gelenkkette) in einer perspektivischen und teilweise geschnittenen Darstellung;

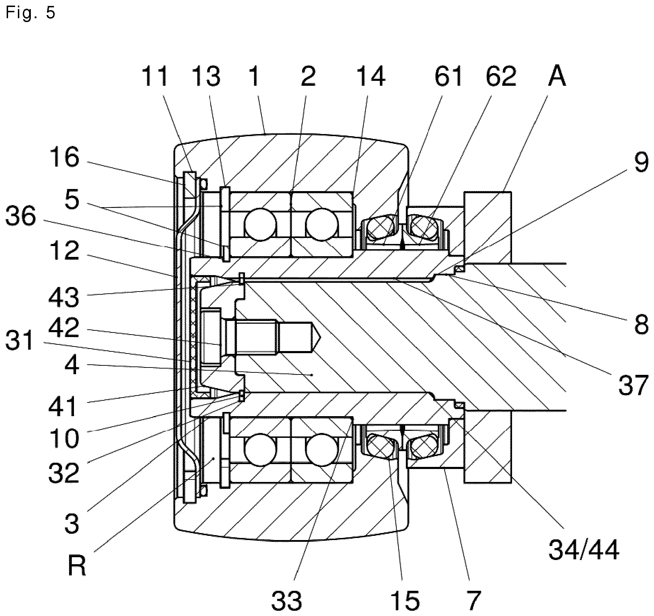

- Fig. 5: eine erfindungsgemäße Laufrolleneinrichtung (mit Außenlasche einer Gelenkkette) in einer geschnittenen Ansicht;

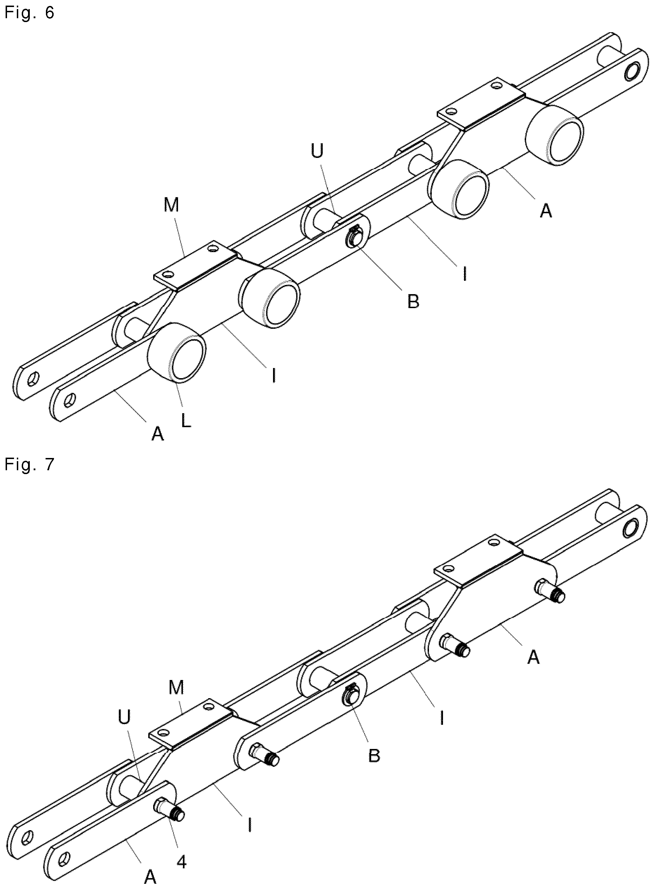

- Fig. 6: eine erfindungsgemäße, als Förderkette ausgestaltete Gelenkkette in einer perspektivischen Ansicht;
- Fig. 7: eine erfindungsgemäße, als Förderkette ausgestaltete Gelenkkette in einer perspektivischen Ansicht ohne aufgesteckte Laufrolleneinheiten;
- Fig. 8: eine weitere Ausführungsform, welche nicht Gegenstand der Erfindung ist, einer Laufrolleneinrichtung (mit Außenlasche) mit Befestigungssystem, jedoch ohne Clip-Befestigungssystem, in einer geschnittenen Darstellung;
- Fig. 9: eine weitere Ausführungsform, welche nicht Gegenstand der Erfindung ist, einer Laufrolleneinrichtung (mit Außenlasche) mit Befestigungssystem, jedoch ohne Clip-Befestigungssystem, in einer geschnittenen Darstellung.

Folgende Bezugszeichen werden in den Abbildungen verwendet:
- A: Außenlasche
- I: Innenlasche
- B: Bolzen
- U: Buchse
- M: Anschlussmittel
- L: Laufrolleneinheit
- R: Schmiermittelaufnahmeraum
- 1: Rolle
- 2: Lager
- 3: Aufsteckbuchse
- 4: Aufsteckbolzen
- 5: Sicherungsring
- 6: Gleitringdichtung
- 7: Gehäuse
- 8: Verdrehsicherungseinrichtung
- 9: Anschlageinrichtung
- 10: Sicherungsring
- 11: Nut
- 12: Rollendeckel
- 13: Nut
- 14: Absatz
- 15: Aussparung
- 16: Sicherungsring
- 31: Aufsteckbuchsendeckel
- 32: Nut
- 33: Absatz
- 34: Absatz
- 35: Ausbuchtung
- 36: Nut
- 41: Platte
- 42: Schraube
- 43: Nut
- 44: Absatz
- 45: Einbuchtung
- 61: erster Dichtungsring
- 62: zweiter Dichtungsring
- 100: Nut
- 101: Sicherungsring
- 102: Sicherungsstift
- 121: verschließbare Öffnung / Einfüllöffnung

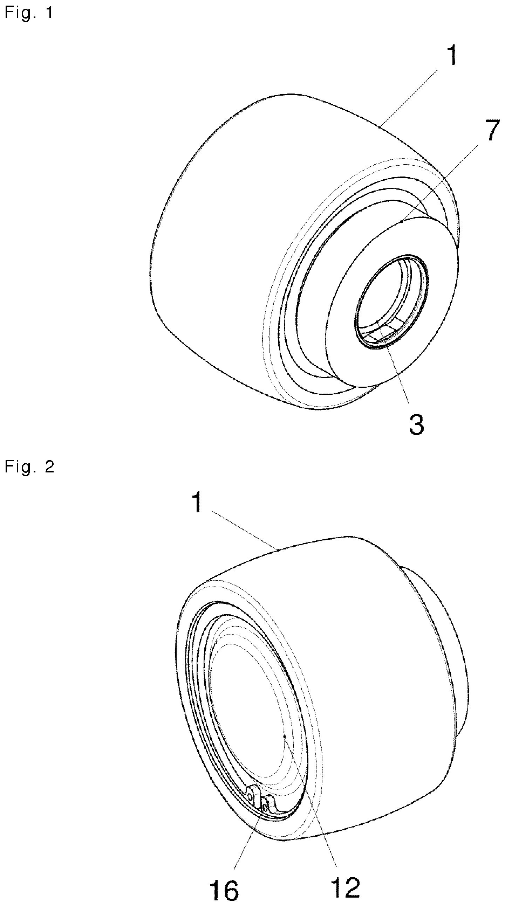

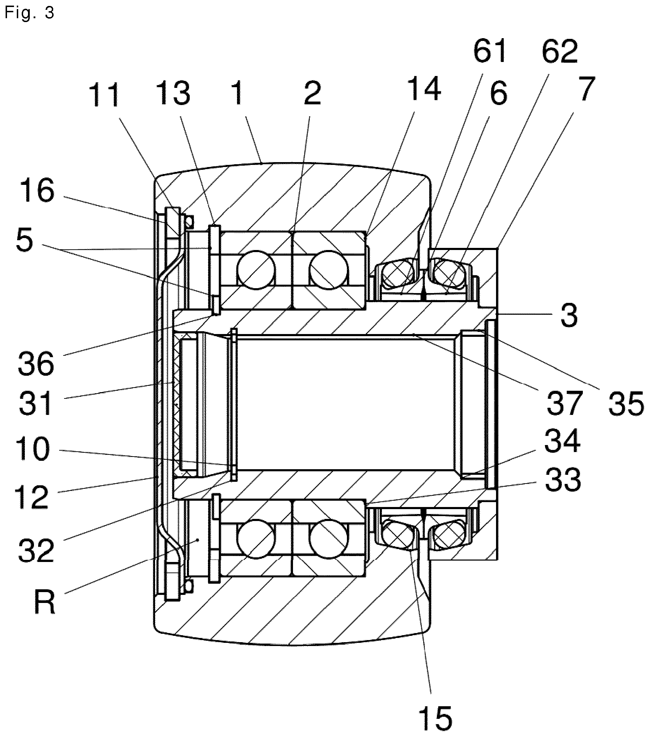

Eine Laufrolle, die in Fig. 1 bis 3 gezeigt ist und kein Gegenstand der Erfindung darstellt, ist als Laufrolleneinheit L ausgestaltet, umfassend im Wesentlichen eine Aufsteckbuchse 3, ein Lager 2, insbesondere ein Drehlager, und eine Rolle 1. Die Aufsteckbuchse 3, das Lager 2 und die Rolle 1 sind lösbar miteinander verbunden, wobei die Rolle 1 um die Aufsteckbuchse 3 über das Lager 2 drehbar gelagert ist.

Die Aufsteckbuchse 3 ist im Wesentlichen hohlzylinderförmig ausgestaltet und weist entsprechend eine äußere Oberfläche und einen Innenraum mit einer inneren Oberfläche auf. Die Aufsteckbuchse 3 weist überwiegend einen kreiszylinderförmigen Querschnitt auf. Als Material der Aufsteckbuchse kommt vorzugsweise Metall, insbesondere Stahl in Frage, aber auch andere Materialien, wie hochfeste Kunststoffe, Nichteisenmetalle, etc. kommen in Frage. Die Aufsteckbuchse 3 kann mit einer Nut 37 in Längsrichtung auf ihrer Innenseite ausgestattet sein, die als Entlüftung bei der Montage auf einem Aufsteckbolzen 4 dienen kann.

Bei der Rolle 1 handelt es sich vorzugsweise um eine herkömmliche Rolle, beispielsweise aus Metall, insbesondere Stahl, Kunststoff, Nichteisenmetall oder einem anderen geeigneten Material. Im Wesentlichen ist die Rolle 1 als hohlzylinderförmiger Körper ausgeführt.

Bei dem zwischen der Rolle 1 und der Aufsteckbuchse 3 angeordneten Lager 2, insbesondere Drehlager, handelt es sich vorzugsweise um ein Wälzlager, insbesondere Kugellager. Aber auch andere Lagertypen sind denkbar. Das Lager 2 ist vorzugsweise axial zwischen der Rolle 1 und der Aufsteckbuchse 3 lösbar fixiert. Hierzu kann beispielsweise die Rolle 1 in ihrem Innenraum einen entsprechenden Absatz 14 und die Aufsteckbuchse 3 auf ihrer Außenfläche ebenfalls einen entsprechenden Absatz 33 aufweisen. Das Lager 2 wird dann zwischen Rolle 1 und Aufsteckbuchse 3 eingeschoben, bis es an beiden Absätzen 14, 33 anliegt. Das eingeschobene Lager 2 wiederum kann durch mindestens einen Sicherungsring 5 gesichert werden, welcher in eine Nut 13 in der Rolle 1 und/oder in eine Nut 36 der Aufsteckbuchse 3 eingesetzt wird. Zur Revision des Lagers 2 können die Sicherungsringe 5 auch wieder entfernt werden. Vorzugsweise kommen hier formschlüssige, lösbare Verbindungen zum Einsatz. Aber auch andere Verbindungsmechanismen, wie kraftschlüssige Verbindungen, sind denkbar.

Die Laufrolleneinheit L stellt eine kompakte Einheit dar, die als Ganzes mit der Aufsteckbuchse 3 auf einen geeigneten Aufsteckbolzen 4 aufgesteckt bzw. auch vorzugsweise als Ganzes von dem Aufsteckbolzen 4 entfernt werden kann.

Ferner kann die Laufrolleneinheit L mit einer Schmiermittelaufnahmeanordnung ausgestattet sein, die vorzugsweise eine Befüllung bereits vor der Montage der Laufrolleneinheit auf einem Aufsteckbolzen 4 ermöglicht.

Die Schmiermittelaufnahmeanordnung kann im Wesentlichen einen Schmiermittelaufnahmeraum R sowie eine Dichtungsanordnung, einen lösbar mit der Rolle 1 verbundenen Rollendeckel 12 und/oder einen lösbar mit der Aufsteckbuchse 3 verbundenen Aufsteckbuchsendeckel 31 umfassen.

Die Dichtungsanordnung kann eine Gleitringdichtung 6 bzw. eine Kombination dieser Gleitringdichtung mit einer weiteren berührenden (bzw. berührungsfreien) Dichtung umfassen. Ferner kann die Dichtungsanordnung ein Gehäuse 7 umfassen. Eine Gleitringdichtung 6 umfasst in der Regel einen ersten Dichtungsring 61 und einen zweiten Dichtungsring 62. Der erste Dichtungsring 61 ist vorzugsweise zwischen der Rolle 1 und der Aufsteckbuchse 3 aufgenommen. Hierzu kann beispielsweise eine ringförmige Aussparung 15 in der Rolle 1 vorgesehen sein. Der zweite Dichtungsring 62 kann beispielsweise in dem Gehäuse 7 aufgenommen sein, welches beispielsweise durch einen im Querschnitt L-förmigen Ring und einen Abschnitt der Aufsteckbuchse 3 gebildet wird. Der Ring kann beispielsweise aufgeschraubt, aufgepresst oder sonst wie an der Aufsteckbuchse 3 befestigt sein. Das Gehäuse 7 kann auch einteilig aus der Aufsteckbuchse 3 gebildet werden. Es ist vorzugsweise vorgesehen, dass die Dichtungsanordnung, insbesondere die Gleitringdichtung 6, vorzugsweise unmittelbar, auf der Aufsteckbuchse 3 angebracht ist. Die Dichtungsanordnung, insbesondere die Gleitringdichtung 6, muss damit nicht mehr direkt auf einem Aufsteckbolzen 4 angeordnet werden, sondern kann auf der Aufsteckbuchse 3 angeordnet sein. Die Dichtungsanordnung trägt dazu bei, den Schmiermittelaufnahmeraum R zu verschließen, insbesondere die an sich hohlzylinderförmige Rolle 1.

Der Rollendeckel 12 ist vorzugsweise auf der anderen Seite der Rolle 1, sprich auf der der Dichtungsanordnung gegenüberliegenden Seite der Laufrolleneinheit L, angeordnet. Vorzugsweise ist der Rollendeckel 12 lösbar mit einem Sicherungsring 16 an der Rolle 1 bzw. einer Nut 11 in der Rolle 1 befestigt. Neben diesem formschlüssigen Verbindungsmittel kommen ebenfalls alternative, lösbare Verbindungsmethoden in Frage. Der Rollendeckel 12 trägt dazu bei, den Schmiermittelaufnahmeraum R zu verschließen, insbesondere die an sich hohlzylinderförmige Rolle 1.

Der Aufsteckbuchsendeckel 31 ist unmittelbar hinter dem Rollendeckel 12 stirnseitig in der Aufsteckbuchse 3 angeordnet. Der Aufsteckbuchsendeckel 31 kann per Presspassung lösbar mit der Aufsteckbuchse 3 oder auf andere geeignete Weise verbunden sein. Der Aufsteckbuchsendeckel 31 trägt dazu bei, den Schmiermittelaufnahmeraum R zu verschließen, insbesondere gegenüber der an sich hohlzylinderförmigen Aufsteckbuchse 3. Zwischen der Rolle 1 und der Aufsteckbuchse 3 sowie zwischen dem Rollendeckel 12, dem Aufsteckbuchsendeckel 31 und der Dichtungsanordnung, insbesondere dem ersten Dichtungsring 61, ergibt sich ein Zwischenraum, der vorzugsweise nicht vollständig durch das Lager 2 ausgefüllt wird. Dieser Rest des Zwischenraums bildet vorzugsweise den Schmiermittelaufnahmeraum R.

Der Schmiermittelaufnahmeraum R ist mit einem Schmiermittel, beispielsweise mit Öl oder Fett, gefüllt, welches die Schmierung des Lagers 2 sicherstellen kann. Dabei kann das Schmiermittel bereits vor der Montage der Laufrolleneinheit L in den Schmiermittelaufnahmeraum R eingefüllt sein, sprich das Schmiermittel muss nicht vor Ort, beispielsweise in der verschmutzten Umgebung einer Förderkette, eingefüllt werden. Dieser Umstand kommt insbesondere einer als Gleitringdichtung ausgestalteten Dichtungsanordnung zu Gute, da diese zwar sehr gut abdichtet, aber in der Regel sehr schmutzanfällig ist.

Eine erfindungsgemäße Laufrolleneinrichtung umfasst die Merkmale des Anspruchs 1. Ferner kann die Laufrolleneinrichtung mit einer Verdrehsicherungseinrichtung 8 und einer Anschlageinrichtung 9 ausgestattet sein.

Bei dem Aufsteckbolzen 4 handelt es sich vorzugsweise um einen Bolzen oder Stift, beispielsweise einen aus einer Gelenkkette herausragenden verlängerten Bolzen B eines Kettengelenkes, auf der die Aufsteckbuchse 3 und damit die Laufrolleneinheit L als Ganzes aufgesteckt werden kann. Aber auch andere Aufsteckbolzen sind denkbar, wie beispielsweise Bolzen, die an Anbauteilen, wie beispielsweise Plattformen von Förderbändern angebracht sind. Eine derartig angebrachte Rolle wäre beispielsweise Teil einer Mittelführung eines Förderbandes. Insofern korrespondiert der Innenraum der Aufsteckbuchse im Wesentlichen mit der äußeren Kontur des Aufsteckbolzens, um ein Aufstecken bzw. Fixieren der Laufrolleneinheit L auf dem Aufsteckbolzen 4 zu ermöglichen.

Um sicherzustellen, dass die Laufrolleneinheit L nur in einem vorbestimmten Maße axial auf den Aufsteckbolzen 4 aufgeschoben werden kann, ist die Laufrolleneinrichtung vorzugsweise mit der Anschlageinrichtung 9 ausgestattet. Die Anschlageinrichtung 9 kann beispielsweise einen Absatz 44 in dem Aufsteckbolzen 4 und einen entsprechenden Absatz 34 in der Aufsteckbuchse 3 umfassen.

Um sicherzustellen, dass die Aufsteckbuchse 4 der Laufrolleneinheit L verdrehsicher auf dem Aufsteckbolzen 4 aufgenommen ist, ist vorzugsweise die Verdrehsicherungseinrichtung 8 vorgesehen. Die Verdrehsicherungseinrichtung 8 kann beispielsweise aus einer Ausbuchtung 35 in dem Querschnitt des Innenraums der Aufsteckbuchse 3 und einer entsprechend korrespondierenden Einbuchtung 45 in der Aufsteckbolzen 4 gebildet werden. Die hier beschriebene formschlüssige Verdrehsicherungseinrichtung 8 kann auch kraftschlüssig oder auf andere geeignete Weise ausgestaltet sein.

Die Anschlageinrichtung 9 und die Verdrehsicherungseinrichtung 8 können in einer Einrichtung zusammengefasst sein.

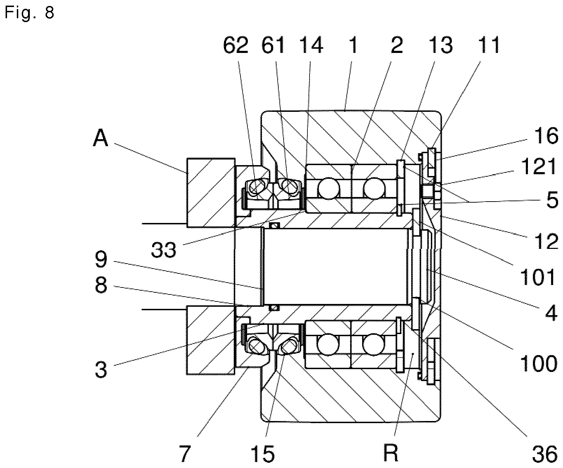

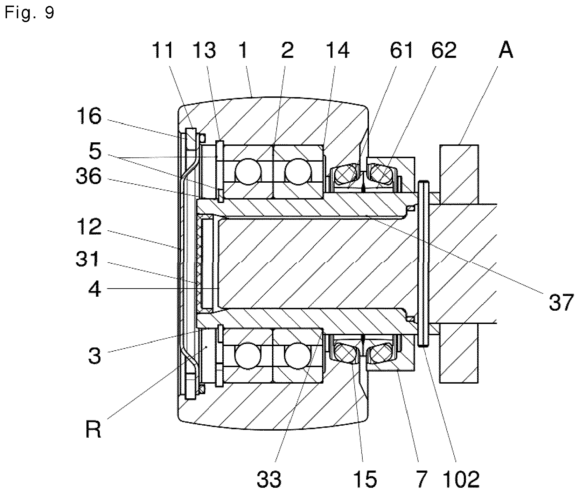

Das Befestigungssystem dient zur lösbaren axialen Fixierung der Aufsteckbuchse 3 auf dem Aufsteckbolzen 4. Ein derartiges Befestigungssystem ist beispielsweise in den Fig. 8 und 9 dargestellt. Es soll jedoch zunächst auf das erfindungsgemäße Clip-Befestigungssystem eingegangen werden.

Das erfindungsgemäße Clip-Befestigungssystem ermöglicht eine werkzeuglose axiale Fixierung der Laufrolleneinheit L auf dem Aufsteckbolzen 4. Die Aufsteckbuchse 3 ist hierzu an geeigneter Stelle der inneren Oberfläche mit einer Nut 32, vorzugsweise radial umlaufenden Nut, und die äußere Oberfläche des Aufsteckbolzens 4 mit einer korrespondierenden Nut 43 ausgestattet. Wahlweise ist in der Nut 32 der Aufsteckbolzen 4 oder der Aufsteckbuchse 3 ein flexibler Sicherungsring 10, sprich ein Clip, eingelegt. Wird die Laufrolleneinheit L auf den Aufsteckbolzen 4 aufgeschoben, weicht der Sicherungsring 10 zunächst zurück bis die Nuten 32, 43 fluchten, um dann in beiden Nuten 32, 43 aufgenommen zu sein und einem Abziehen der Laufrolleneinheit L entgegenzuwirken. Das Clip-Befestigungssystem ist demnach als formschlüssiges Verbindungsmittel ausgestaltet.

Zusätzlich ist das Clip-Befestigungssystem mit einer Löseeinrichtung ausgestattet, welches das nachträgliche Lösen des Clip-Befestigungssystems ermöglicht. Hierzu wird die Nut 43 in dem Aufsteckbolzen 4 durch den Aufsteckbolzen 4 selbst und eine vor die Stirnseite des Aufsteckbolzens 4 mittels Schraube 42 aufgeschraubte oder sonst wie lösbar angebrachte Platte 41 gebildet. Um das Clip-Befestigungssystem wieder zu lösen, werden der Rollendeckel 12 und der Aufsteckbuchsendeckel 31 abgenommen und die Platte 41 durch Herausschrauben der Schraube 42 gelöst. Entsprechend kann die Laufrolleneinheit L von dem Aufsteckbolzen 4 abgezogen werden. Die Montage erfolgt wie gehabt, wenn die Platte 41 zunächst wieder aufgeschraubt wird. Die Laufrolleneinheit L kann ausgetauscht oder beispielsweise wieder mit Schmierstoff befüllt und der Rollendeckel 12 bzw.

Aufsteckbuchsendeckel 31 erneut geschlossen werden. Die Laufrolleneinheit L kann wieder durch einfaches Aufstecken auf den Aufsteckbolzen 4 befestigt werden.

Eine erfindungsgemäße Gelenkkette umfasst eine erfindungsgemäße Laufrolleneinrichtung.

Der Aufbau einer Gelenkkette ist dem Fachmann hinreichend bekannt. Eine Gelenkkette, insbesondere eine Buchsenkette, ist im Wesentlichen aus zwei aneinander gereihten Kettenelementen aufgebaut. Diese Elemente werden auch als Innen- und Außenglied bezeichnet. Ein Außenglied besteht in der Regel aus zwei Außenlaschen A, welche durch zwei Bolzen B miteinander verbunden sind. Ein Innenglied setzt sich in der Regel aus zwei Innenlaschen I zusammen, die mittels zweier Buchsen U miteinander verbunden sind. Auch Ausführungen mit nur einer Lasche, die beispielsweise als Blocklasche ausgeführt ist, sind denkbar. Jeweils eine Buchse U und ein in die Buchse eingesteckter Bolzen B benachbarter Kettenglieder bilden ein Kettengelenk. Diese Gelenke ermöglichen der Gelenkkette beispielsweise ein Umschlingen der im Antriebsstrang befindlichen Kettenräder.

Gelenkketten werden, neben zahlreichen anderen Anwendungen, gerne als Förderkette eingesetzt. Hierzu ist die Gelenkkette mit mindestens einer Laufrolleneinrichtung und vorzugsweise mit Anschlussmitteln M zur Anbringung von Anbauteilen, wie beispielsweise Plattformen, ausgestattet.

Als Anschlussmittel M für Anbauteile kommen beispielsweise im Querschnitt L-förmige Winkellaschen in Frage, die statt oder zusätzlich zu den herkömmlichen Laschen in der Gelenkkette verbaut werden. Aber auch andere Anschlussmittel für Anbauteile sind denkbar.

Wie bereits oben beschrieben, ist eine als Förderkette ausgestaltete erfindungsgemäße Gelenkkette mit mindestens einer Laufrolleneinheit L ausgestattet. Zur Anbringung der jeweiligen Laufrolleneinheit L ist die Gelenkkette mit einem zugeordneten Aufsteckbolzen 4 ausgestattet, der zum Aufstecken der Laufrolleneinheit L eingerichtet ist. In der Regel handelt es sich bei dem Aufsteckbolzen 4 um einen verlängerten Bolzen B der Gelenkkette, bei dem ein Bolzenabschnitt als Aufsteckbolzen 4 aus der Außenlasche A der Gelenkkette hervorsteht. Der Aufsteckbolzen 4 ist in der Regel senkrecht zur Kettenlängsrichtung bzw. Laufrichtung ausgerichtet.

Eine etwas abgewandelte Version der Laufrolle bzw. Laufrolleneinrichtung, die nicht Gegenstand der Erfindung ist, ist in Fig. 8 dargestellt. Der Rollendeckel 12 ist hier mit einer Einfüllöffnung 121 für Schmiermittel ausgestattet. Zudem verfügt die hier dargestellte Ausführungsform nicht über ein Clip-Befestigungssystem und auch nicht über einen Aufsteckbuchsendeckel. In einer Nut 100 des Aufsteckbolzens 4, die in einem aufgesteckten Zustand außerhalb der Aufsteckbuchse 3 angeordnet ist, ist ein Sicherungsring 101 aufgesteckt. Dieser fixiert die Aufsteckbuchse 3 axial auf dem Aufsteckbolzen 4. Hierdurch wird ein bereits oben erwähntes Befestigungssystem bereitgestellt.

Ein weiteres Ausführungsbeispiel einer Laufrolle bzw. Laufrolleneinrichtung, das ebenfalls nicht Gegenstand der Erfindung ist, ist in Fig. 9 dargestellt. Hier wird das Befestigungssystem für die Aufsteckbuchse 3 auf dem Aufsteckbolzen 4 im Wesentlichen durch einen Sicherungsstift 102 realisiert, der durch fluchtende Bohrungen in der Aufsteckbuchse 3 und dem Aufsteckbolzen 4 hindurch gesteckt wird. Die fluchtenden Bohrungen befinden sich vorzugsweise außerhalb des Schmiermittelaufnahmeraums R, insbesondere zwischen Gehäuse 7 und Lasche A. Die Bohrungen sind vorzugsweise quer zur Längsachse der Aufsteckbuchse 3 bzw. des Aufsteckbolzens 4 ausgerichtet. Bei dieser Ausgestaltung des Befestigungssystems kann beispielsweise auf die Verdrehsicherungseinrichtung 8 und/oder die Anschlageinrichtung 9 verzichtet werden.

## Patentansprüche

1. Laufrolleneinrichtung, umfassend
- einen Aufsteckbolzen (4),
- eine auf dem Aufsteckbolzen (4) angebrachte Laufrolle, wobei die Laufrolle als Laufrolleneinheit (L) ausgestaltet ist, die mindestens eine Aufsteckbuchse (3), ein Lager (2) und eine Rolle (1) aufweist, wobei die Aufsteckbuchse (3), das Lager (2) und die Rolle (1) lösbar miteinander verbunden sind und wobei die Rolle (1) um die Aufsteckbuchse (3) über das Lager (2) drehbar gelagert ist, sowie
- ein Befestigungssystem zur lösbaren axialen Fixierung der Aufsteckbuchse (3) der Laufrolleneinheit (L) auf dem Aufsteckbolzen (4),
wobei das Befestigungssystem als Clip-Befestigungssystem zur werkzeuglosen Montage der Laufrolleneinheit (L) auf dem Aufsteckbolzen (4) ausgestaltet ist, wobei das Clip-Befestigungssystem eine Nut (32) in der inneren Oberfläche der Aufsteckbuchse (3) sowie eine Nut (43) in der Oberfläche des Aufsteckbolzens (4) sowie einen flexiblen Sicherungsring (10), der in beiden Nuten (32, 43) aufgenommen ist, um einem Abziehen der Laufrolleneinheit (L) entgegenzuwirken, umfasst, **dadurch gekennzeichnet, dass** das Clip-Befestigungssystem mit einer Löseeinrichtung ausgestattet ist, wobei die Nut (43) in dem Aufsteckbolzen (4) durch den Aufsteckbolzen (4) selbst und eine vor der Stirnseite des Aufsteckbolzens (4) lösbar befestigte Platte (41) gebildet ist.

2. Laufrolleneinrichtung nach Anspruch 1, **dadurch gekennzeichnet, dass** das Lager (2) zwischen der Rolle (1) und der Aufsteckbuchse (3) lösbar axial fixiert ist, wobei die lösbare axiale Fixierung insbesondere einen Absatz (14) im Innenraum der Rolle (1) sowie einen entsprechenden Absatz (33) auf der Außenfläche der Aufsteckbuchse (3) sowie mindestens einen Sicherungsring (5) umfasst, der in eine Nut (13) in der Rolle (1) und/oder in eine Nut (36) der Aufsteckbuchse (3) eingesetzt wird.

3. Laufrolleneinrichtung nach einem der Ansprüche 1 oder 2, **dadurch gekennzeichnet, dass** die Laufrolle mit einer Schmiermittelaufnahmeanordnung ausgestattet ist.

4. Laufrolleneinrichtung nach Anspruch 3, **dadurch gekennzeichnet, dass** die Schmiermittelaufnahmeanordnung einen Schmiermittelaufnahmeraum (R) umfasst.

5. Laufrolleneinrichtung nach einem der Ansprüche 3 oder 4, **dadurch gekennzeichnet, dass** die Schmiermittelaufnahmeanordnung eine Dichtungsanordnung, insbesondere mindestens eine Gleitringdichtung, umfasst.

6. Laufrolleneinrichtung nach einem der Ansprüche 3 bis 5, **dadurch gekennzeichnet, dass** die Schmiermittelaufnahmeanordnung einen lösbar mit der Rolle (1) verbundenen Rollendeckel (12) und/oder einen lösbar mit der Aufsteckbuchse (3) verbundenen Aufsteckbuchsendeckel (31) umfasst.

7. Laufrolleneinrichtung nach einem der Ansprüche 1 bis 6, **dadurch gekennzeichnet, dass** die Laufrolleneinrichtung mit einer Verdrehsicherungseinrichtung (8) zwischen der Aufsteckbuchse (3) und dem Aufsteckbolzen (4) ausgestattet ist, wobei die Verdrehsicherungseinrichtung (8) insbesondere eine Ausbuchtung (35) in dem Innenraum der Aufsteckbuchse (3) und eine korrespondierende Einbuchtung (45) in dem Aufsteckbolzen (4) umfasst.

8. Laufrolleneinrichtung nach einem der Ansprüche 1 bis 7,
**dadurch gekennzeichnet, dass** die Laufrolleneinrichtung mit einer Anschlageinrichtung (9) zur Begrenzung der axialen Verschiebbarkeit der Aufsteckbuchse (3) gegenüber dem Aufsteckbolzen (4) ausgestattet ist, wobei die Anschlageinrichtung (9) insbesondere einen Absatz (44) an dem Aufsteckbolzen (4) und einen entsprechenden Absatz (34) an der Aufsteckbuchse (3) umfasst.

9. Gelenkkette, **dadurch gekennzeichnet, dass** die Gelenkkette mit einer Laufrolleneinrichtung gemäß einem der Ansprüche 1 bis 8 ausgestattet ist.

10. Gelenkkette nach Anspruch 9, **dadurch gekennzeichnet, dass** die Gelenkkette mindestens zwei Kettenglieder, insbesondere ein Innenglied und ein Außenglied umfasst, wobei das Innenglied als Blocklasche mit zwei Buchsen ausgestaltet ist oder mindestens zwei Innenlaschen (I) umfasst, die von zwei Buchsen (U) miteinander verbunden sind, wobei das Außenglied mindestens zwei Außenlaschen (A) umfasst, die mit zwei Bolzen (B) miteinander verbunden sind, wobei jeweils eine Buchse und ein in die Buchse eingesteckter Bolzen benachbarter Kettenglieder ein Kettengelenk ausbilden, wobei der Aufsteckbolzen (4) als Verlängerung des Bolzens (B) ausgestaltet ist, der aus der Außenlasche (A) herausragt, wobei die Laufrolleneinheit auf den Aufsteckbolzen (4) aufgesteckt ist.

11. Verwendung einer Gelenkkette nach einem der Ansprüche 9 oder 10 als Förderkette.

## Claims

1. Roller device, comprising
- an attachment bolt (4),
- a roller mounted onto the attachment bolt (4), wherein the roller is configured as a roller unit (L) which has at least one attachment bush (3), a bearing (2) and a roller (1), wherein the attachment bush (3), the bearing (2) and the roller (1) are connected to one another detachably and wherein the roller (1) is rotatably mounted about the attachment bush (3) via the bearing (2), and
- a fastening system for the detachable axial fixing of the attachment bush (3) of the roller unit (L) to the attachment bolt (4),
wherein the fastening system is configured as a clip-fastening system for mounting the roller unit (L) on the attachment bolt (4) without using tools, wherein the clip-fastening system comprises a groove (32) in the inner surface of the attachment bush (3) and a groove (43) in the surface of the attachment bolt (4) and a flexible securing ring (10), which is mounted in the two grooves (32, 43), in order to prevent the roller unit (L) from being pulled off, **characterised in that** the clip-fastening system is provided with a release device, wherein the groove (43) in the attachment bolt (4) is formed by the attachment bolt (4) itself and a plate (41) detachably fixed in front of the end face of the attachment bolt (4).

2. Roller device according to claim 1, **characterised in that** the bearing (2) is axially fixed detachably between the roller (1) and the attachment bush (3), wherein the detachable axial fixing comprises in particular a shoulder (14) in the interior of the roller (1) and a corresponding shoulder (33) on the outer surface of the attachment bush (3) and at least one securing ring (5), which is inserted into a groove (13) in the roller (1) and/or into a groove (36) of the attachment bush (3).

3. Roller device according to any one of claims 1 or 2, **characterised in that** the roller is provided with a lubricant receiving arrangement.

4. Roller device according to claim 3, **characterised in that** the lubricant receiving arrangement comprises a lubricant receiving space (R).

5. Roller device according to any one of claims 3 or 4, **characterised in that** the lubricant receiving arrangement comprises a sealing arrangement, in particular at least one mechanical seal.

6. Roller device according to any one of claims 3 to 5, **characterised in that** the lubricant receiving arrangement comprises a roller cover (12) connected detachably to the roller (1) and/or an attachment bush cover (31) connected detachably to the attachment bush (3).

7. Roller device according to any one of claims 1 to 6, **characterised in that** the roller device is equipped with an anti-rotation device (8) between the attachment bush (3) and the attachment bolt (4), wherein the anti-rotation device (8) comprises in particular a bulge (35) in the interior of the attachment bush (3) and a corresponding indentation (45) in the attachment bolt (4).

8. Roller device according to any one of claims 1 to 7, **characterised in that** the roller device is provided with a stop device (9) for limiting the axial displaceability of the attachment bush (3) relative to the attachment bolt (4), wherein the stop device (9) comprises in particular a shoulder (44) on the attachment bolt (4) and a corresponding shoulder (34) on the attachment bush (3).

9. Link chain, **characterised in that** the link chain is equipped with a roller device according to any one of claims 1 to 8.

10. Link chain according to claim 9, **characterised in that** the link chain comprises at least two chain links, in particular an inner link and an outer link, wherein the inner link is configured as a block link plate with two bushes or at least two inner link plates (I), which are connected to one another by two bushes (U), wherein the outer link comprises at least two outer link plates (A), which are connected to one another by two bolts (B), wherein a bush and a bolt of adjacent chain links inserted into the bush form a chain link, wherein the attachment bolt (4) is configured as an extension of bolt (B), which projects out of the outer link plate (A), wherein the roller unit is fitted onto the attachment bolt (4).

11. Use of a link chain according to any one of claims 9 or 10 as a conveying chain.

## Revendications

1. Mécanisme à galet de roulement comprenant
- un boulon d'enfichage (4),
- un galet de roulement monté sur le boulon d'enfichage (4), dans lequel le galet de roulement est configuré comme unité de galet de roulement (L) qui présente au moins une douille d'enfichage (3), un palier (2) et un galet (1), dans lequel la douille d'enfichage (3), le palier (2) et le galet (1) sont reliés entre eux de manière amovible et dans lequel le galet (1) est logé de manière rotative autour de la douille d'enfichage (3) par le biais du palier (2), ainsi que
- un système de fixation pour la fixation axiale amovible de la douille d'enfichage (3) de l'unité de galet de roulement (L) sur le boulon d'enfichage (4),
dans lequel le système de fixation est configuré comme système de fixation à clip pour le montage sans outil de l'unité de galet de roulement (L) sur le boulon d'enfichage (4), dans lequel le système de fixation à clip présente une rainure (32) dans la surface intérieure de la douille d'enfichage (3) ainsi qu'une rainure (43) dans la surface du boulon d'enfichage (4) ainsi qu'une bague de blocage (10) flexible qui est reçue dans les deux rainures (32, 43) afin d'agir contre un retrait de l'unité de galet de roulement (L), **caractérisé en ce que** le système de fixation à clip est équipé d'un dispositif de détachement, dans lequel la rainure (43) est formée dans le boulon d'enfichage (4) par le boulon d'enfichage (4) même et une plaque (41) fixée avant le côté avant du boulon d'enfichage (4) de manière détachable.

2. Mécanisme à galet de roulement selon la revendication 1, **caractérisé en ce que** le palier (2) est fixé de manière amovible axialement entre le galet (1) et la douille d'enfichage (3), dans lequel la fixation axiale amovible comporte en particulier un épaulement (14) dans l'espace intérieur du galet (1) ainsi qu'un épaulement (33) correspondant sur la surface extérieure de la douille d'enfichage (3) ainsi qu'au moins une bague de blocage (5) qui est insérée dans une rainure (13) dans le galet (1) et/ou dans une rainure (36) de la douille d'enfichage (3).

3. Mécanisme à galet de roulement selon l'une quelconque des revendications 1 ou 2, **caractérisé en ce que** le galet de roulement est équipé d'un agencement de réception de lubrifiant.

4. Mécanisme à galet de roulement selon la revendication 3, **caractérisé en ce que** l'agencement de réception de lubrifiant comporte un espace de réception de lubrifiant (R).

5. Mécanisme à galet de roulement selon l'une quelconque des revendication 3 ou 4, **caractérisé en ce que** l'agencement de réception de lubrifiant comporte un agencement de garniture étanche, en particulier au moins une garniture étanche à anneau glissant.

6. Mécanisme à galet de roulement selon l'une quelconque des revendications 3 à 5, **caractérisé en ce que** l'agencement de réception de lubrifiant comporte un couvercle de galet (12) relié de manière amovible au galet (1) et/ou un couvercle de douille d'enfichage (31) relié de manière amovible à la douille d'enfichage (3).

7. Mécanisme à galet de roulement selon l'une quelconque des revendications 1 à 6, **caractérisé en ce que** le mécanisme à galet de roulement est équipé d'un dispositif anti-rotation (8) entre la douille d'enfichage (3) et le boulon d'enfichage (4), dans lequel le dispositif anti-rotation (8) comporte en particulier un renflement (35) dans l'espace intérieur de la douille d'enfichage (3) et un renfoncement correspondant (45) dans le boulon d'enfichage (4).

8. Mécanisme à galet de roulement selon l'une quelconque des revendication 1 à 7, **caractérisé en ce que** le mécanisme à galet de roulement est équipé d'un dispositif de butée (9) pour la limitation de la mobilité axiale de la douille d'enfichage (3) par rapport au boulon d'enfichage (4), dans lequel le dispositif de butée (9) comporte en particulier un épaulement (44) sur le boulon d'enfichage (4) et un épaulement (34) correspondant sur la douille d'enfichage (3).

9. Chaîne à articulations, **caractérisée en ce que** la chaîne à articulations est équipée d'un mécanisme à galet de roulement selon l'une quelconque des revendications 1 à 8.

10. Chaîne à articulations selon la revendication 9, **caractérisée en ce que** la chaîne articulée comporte au moins deux maillons de chaîne, en particulier un maillon intérieur et un maillon extérieur, dans laquelle le maillon intérieur est configuré comme languette de bloc avec deux douilles ou comporte au moins deux languettes intérieures (I) qui sont reliées entre elles par deux douilles (U), dans lequel le maillon extérieur comporte au moins deux languettes extérieures (A) qui sont reliées entre elles avec deux boulons (B), dans laquelle respectivement une douille et un boulon enfiché dans la douille de maillons de chaîne contigus réalisent une articulation de chaîne, dans laquelle le boulon d'enfichage (4) est configuré comme prolongement du boulon (B) qui dépasse de la languette extérieure (A), dans laquelle l'unité de galet de roulement est enfichée sur le boulon d'enfichage (4).

11. Utilisation d'une chaîne à articulations selon l'une quelconque des revendications 9 ou 10 comme chaîne de transport.
